# EUROPEAN PATENT APPLICATION

(11) **EP 4 346 257 A1**
(43) Date of publication of application: **03.04.2024**
(21) Application number: 22306446.0
(22) Date of filing: 29.09.2022
(51) Int. Cl.: H04W 12/08, H04W 76/14, H04W 4/40, H04W 12/082, H04W 12/30

(54) **INTER-PLMN PC5 LINK WITH FEEDBACK SUPPORT AND AUTHORISATION**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: CIOCHINA, Cristina, 35000 RENNES (FR); KHANFOUCI, MOURAD, 35708 RENNES CEDEX 7 (FR)
(74) Representative: Plasseraud IP

(57) **Abstract**

The disclosure relates to a communication method between a first network element attached to a first public land mobile network and a second network element attached to a second public land mobile network, the second network element not being attached to the first public land mobile network,
the method comprising at least one element of the following list:
initiating a provisioning of an authorization for the second network element to access a specific network resource of the first public land mobile network, wherein the authorization only enables the second network element to access said specific network resource for a specific use related to a communication with the first network element,
- provisioning, at the first public land mobile network, the authorization to the second network element, and
- accessing, at the second network element, the specific network resource of the first public land mobile network for the specific use.

## Description

### DOMAIN

The disclosure belongs to the field of telecommunications.

In particular, there are disclosed a communication method, a computer program, an application server, a federation manager, an authorization providing module and a network element.

### BACKGROUND

In various technological fields, optimizing device-to-device communications between User Equipments (UEs), or other network elements, that may be attached to different Public Land Mobile Networks (PLMNs) is a recurring issue.

High-quality Vehicle-to-everything (V2X) applications are examples of applications that require frequently configuring and reconfiguring communications between a UE associated to a vehicle and attached to a PLMN and various network elements attached to the same or to other PLMNs.

Several manners of having a V2X service between two UEs attached to different PLMNs are known.

A possibility is to have a V2X communication established via the respective PLMNs in a Vehicle-to-Network-to-Vehicle (V2N2V) manner. To do so, each UE is attached to a base station (gNB) in its own PLMN and has for instance LTE-Uu or 5G Uu based V2X communication, while the two PLMNs exchange control and/or application layer data regarding their respective UEs.

The general steps for setting this V2N2V communication are given as a high-level application aided discovery of the UEs participating to the communication, and a low-level establishment of a PC5 link between the UEs attached to their respective PLMN.

The discovery step between the PLMNs may be based on two discovery protocols that are described in TS 23.303/TS 23.304 and summarized below. In this summary, it is assumed that a first user equipment (UE-A) is camping on a first public land mobile network (PLMN-A) and a second user equipment (UE-B) is camping on a second public land mobile network (PLMN-B).

UE-A and UE-B both obtain, from a V2X application layer, application parameters such as an application identifier and/or a group identifier. UE-A determines its own source L2 transmission identifier that corresponds to a PC5 identification of UE(A) at a Media Access Control (MAC) level. UE-B also determines its own source L2 transmission identifier.

UE-A announces its L2 transmission identifier to its neighboring UEs. The state-of-the-art considers essentially single PLMN deployment.

UE-B receives packets tagged with the L2 source transmission identifier from UE- A and responds to UE-A.

When UE-A receives the response from UE-B, tagged with the L2 source transmission identifier of UE-A, it sets UE-B as a discovered UE.

Finally, UE-A and UE-B each request the establishment of a sidelink at a physical layer (PC5 link) by communicating through the radio access network (NG-RAN) of its respective PLMN. The processing of the requests involves the NG-RAN and the core networks of PLMN-A and PLMN-B.

The establishment of the sidelink at the physical layer consists of obtaining authorizations, security credentials, QoS policy parameters and various other parameters.

The overall procedure, i.e. discovery and PC5 link establishment as described above has the drawback of a very long latency.

Other possibilities lie with roaming-based solutions, where a single PLMN deploys a network in a given geographical area to provide the V2X service. However, roaming-based solutions have the inconvenient of lack of flexibility and of deployment restrictions. Neighboring PLMNs need to be co-deployed. Inter-operator roaming at the border of coverage areas leads to long latency and service interruptions.

3GPP specifications TS23.287 and TS23.304 introduce architectural support for the possibility of having a UE-A attached to PLMN-A discover and possibly initiate basic direct communication over PC5 (sidelink) interface with a UE-B attached to PLMN-B. Described features include having a preconfiguration given to the UE including a list of allowed PLMNs for monitoring of discovery resources. There is an interconnexion at core network level between the two PLMNs. Nevertheless, there is no further support for this feature in the lower layers. Moreover, any configuration or reconfiguration of the inter-PLMN PC5 parameters has rather long latency.

Therefore, there is a need for a framework allowing establishing and maintaining, with an improved latency, direct communication between user equipments attached to different PLMNs.

### SUMMARY

The invention is defined by the appended independent claims. Additional features and advantages of the concepts herein disclosed are set forth in the description which follows.

An objective of the present invention is to overcome the above limitations.

Here is thus disclosed a communication method between a first network element attached to a first public land mobile network (PLMN-A) and a second network element attached to a second public land mobile network (PLMN-B), the second network element not being attached to the first public land mobile network (PLMN-A),
the method being related to an authorization for the second network element to access a specific network resource of the first public land mobile network (PLMN-A), wherein the authorization only enables the second network element to access said specific network resource for a specific use related to a communication with the first network element,
the method comprising at least one element of the following list:
   - initiating a provisioning of the authorization,
   - provisioning, at the first public land mobile network, the authorization to the second network element, and
   - accessing, at the second network element, the specific network resource of the first public land mobile network for the specific use.

The proposed method allows any network element, having received an initial communication from a UE in a given PLMN, to use a feedback channel in a resource pool managed by the same PLMN. Advantages of the proposed method include that a specific framework is provided for multi-PLMN establishment of, for instance, a PC5 link, and that such specific framework allows establishing such link in a far shorter time interval than according to known procedures.

Therefore, in unicast/multicast communication, the proposed method enables HARQ feedback, which may either be an explicit ACK/NACK response or a NACK only response (in multicast) to a transmitted transport block. The ACK and/or NACK response may be sent over a channel which physical resource placement is directly linked to physical layer parameters such as resource pool configuration, resources occupied by the data transmission the ACK/NACK feedback relates to, and, for groupcast communication, to an identity of the receiver withing the groupcast group.

More details are provided on different options in the following.

In an example, initiating the provisioning of the authorization is performed based on application-level information obtained at an application server (AS) handling application layer clients (APP) being run on the first and second network elements.

In an example, initiating the provisioning of the authorization is performed based on application-level information obtained at a federation manager connected to the first and the second public land mobile networks, the federation manager having discovered a service involving an application server (AS) handling application layer clients (APP) being run on the first and second network elements.

In an example, the application-level information comprises an indication that the first and second network elements are both members of a same group of network elements.

In an example, the method further comprises forming and/or managing groups of network elements attached to different public land mobile networks.

In an example, forming and/or managing the groups of network elements is based on collected data related to the network elements. In an example, said collected data comprises, for a given network element, data of at least one type among the following list:
- an indication of a physical location,
- an estimation of a communication performance,
- an estimation of a quality-of-service sustainability, and
- a grouping information with at least one other network element attached to the same public land mobile network.

In an example, the method comprises transmitting assistance information to the first and the second public land mobile networks, the assistance information being related to the authorization to be provisioned.

In an example, the method comprises performing a network coordination between the first and the second public land mobile networks based on the assistance information.

In an example, the assistance information comprises at least an indicator, or a request, of inter-public land mobile network support.

In an example, the network coordination is a core network coordination and/or a radio access network coordination.

In an example, the method further comprises, for instance at the first public land mobile network, performing a discovery of the second network element through communication with the second public land mobile network.

In an example, the method further comprises performing a discovery of the second network element at the first public land mobile network, at least by performing an exchange of information through a PC5 interface between the first network element and the second network element.

In an example, performing the exchange of information comprises, at the first network element, discovering the second network element through the PC5 interface.

In an example, the specific network resource is related to at least one physical resource, defining a physical channel of the first public land mobile network.

In an example, the physical channel is one of the following channels: PSFCH, PSSCH, PUSCH and PUCCH.

In an example, the specific use is sending hybrid automatic repeat request feedback to the first network element in response to a data packet previously sent by the first network element using a network resource of the first public land mobile network when the second network element is an intended recipient of the data packet. The network resource is herein understood as, for instance, one or more time slots, one or more time frequency resources, one or more physical resource blocks, etc.

It is further disclosed a computer program comprising instructions which, when the program is executed by a processor, cause the processor to carry out the method above.

It is further disclosed a processing circuit equipped with a processor operably connected to a memory, the processor being configured to carry out the method above.

It is further disclosed an application server in a communication system comprising a first network element attached to a first public land mobile network (PLMN-A) and a second network element attached to a second public land mobile network (PLMN-B), the second network element not being attached to the first public land mobile network (PLMN-A), the first and the second network elements each running an application layer client (APP),
- the application server (AS) handling the application layer clients,
- the application server being configured for transmitting application-level information to an authorization provisioning initiation module configured for initiating, based on the application-level information, a provisioning of an authorization for the second network element to access a specific network resource of the first public land mobile network (PLMN-A), wherein the authorization only enables the second network element to access said specific network resource for a specific use related to a communication with the first network element.

It is further disclosed a federation manager in a communication system comprising a first network element attached to a first public land mobile network (PLMN-A) and a second network element attached to a second public land mobile network (PLMN-B), the second network element not being attached to the first public land mobile network (PLMN-A), the first and the second network elements each running an application layer client (APP),
- the federation manager being connected to the first public land mobile network and to the second public land mobile network,
- the federation manager having discovered a service involving an application server (AS) handling the application layer clients (APP),
- the federation manager being configured for transmitting application-level information to an authorization provisioning initiation module configured for initiating, based on the application-level information, a provisioning of an authorization for the second network element to access a specific network resource of the first public land mobile network (PLMN-A), wherein the authorization only enables the second network element to access said specific network resource for a specific use related to a communication with the first network element.

It is further disclosed an authorization provisioning module in a communication system comprising a first network element attached to a first public land mobile network (PLMN-A) and a second network element attached to a second public land mobile network (PLMN-B), the second network element not being attached to the first public land mobile network (PLMN-A), - the authorization provisioning module being configured for provisioning, at the first public land mobile network, an authorization for the second network element to access a specific network resource of the first public land mobile network (PLMN-A), wherein the authorization only enables the second network element to access said specific network resource for a specific use related to a communication with the first network element.

It is further disclosed a network element in a communication system,
- the communication system further comprising a corresponding network element attached to a first public land mobile network (PLMN-A),
- the network element being attached to a second public land mobile network (PLMN-B),
- the network element not being attached to the first public land mobile network (PLMN-A),
- the network element being configured for accessing a specific network resource of the first public land mobile network (PLMN-A) for a specific use relating to a communication with the corresponding network element.

The network element may indifferently be a user equipment or a base station of the second public land mobile network.

### BRIEF DESCRIPTION OF THE DRAWINGS

Figure 1 illustrates an example of a communication system.
Figure 2 illustrates an example of a communication method that is adapted to the communication system of Figure 1.
Figure 3 illustrates an example of a slot format.
Figure 4 illustrates an example of resource utilization in a communication system.
Figure 5 depicts an example of a processing circuit of an entity configured to carry out a communication method.

### DETAILED DESCRIPTION

The present disclosure relates generally to a method, and to corresponding devices, for authorizing inter-public land mobile network (PLMN) direct communications, provisioning parameters for such direct communications and performing such direct communications.

More precisely, the proposed technique enables direct communication between a user equipment (UE-B) attached to its home network (PLMN-B) and at least one network element (A), which may also be a UE or another entity such as a gNB, of a different network (PLMN-A) over resources belonging to PLMN-A, UE-B not being attached to PLMN-A.

It shall be noted that unlike prior art, the proposed method does not involve roaming, dual connectivity or inter-PLMN discovery. Therefore, UE-B is configured to use PLMN-B's licensed spectrum for its own data transmission, not PLMN-A's licensed spectrum.

UE-B is only granted a special authorization to use part of PLMN-A's licensed spectrum for limited, strictly controlled use such as for sending HARQ messages in response to a data packet sent by UE-A in PLMN-A's licensed spectrum when network element A is among the intended recipients of the packet.

Such special authorization may be obtained through a service offered by the PLMNs to a set of their respective UEs based on subscription. PLMNs are able of ensuring a controlled high QoS by e.g. ensuring large resource pools in their licensed spectrum for high throughput applications, or by operating the service under network supervision, such as under collision free "mode 1" resource allocation with resource scheduling. Special authorizations may be obtained through such service as a result of inter-PLMN mutual or reciprocal agreements and enable low latency direct communication between network elements attached to different PLMNs and having subscribed to the service.

Further, gNBs of PLMN-A may be configured to directly transmit reconfiguration messages to groups of subscriber UEs (including e.g. UE-B) attached to other PLMNs. Such reconfiguration messages comprise information related to dedicated resource pools of PLMN-A enabling an already established direct communication with network element A. Reconfigurating direct communication links through gNB-level or RAN-level signalling messages or exchanges eliminates the need of routing any reconfiguration messages through a core network or through a specific multi-access edge computing layer that would be common to multiple PLMNs. As a result, the latency of reconfiguration is lowered.

In an exemplary embodiment, multiple possible aspects of the proposed method are now briefly described.

Considering for instance a V2X communication system, a V2X application may initially determine groups of network elements that can benefit from direct communications. This determination is based on application-level information and services that are considered readily available to the V2X application.

Then, considering for instance a group of network elements as determined above, the V2X application may transmit application assistance information to the PLMNs. Such application assistance information comprises at least an indicator/request of inter-PLMN support for the group members. The application assistance information may further comprise information relating to application identification of the group members, information relating to one or more actions to be performed by the PLMNs, and/or additional information such as a validity timer.

After having received the application assistance information, PLMNs may negotiate and exchange, at different network levels, information needed for implementing direct communication between the group members. The exchanged information may relate for instance to physical resource structure, to configuration or reconfiguration, to authorization limitations, to validity timers, to authorization revoking, to the existence of group members, to identification of group members, etc.

Based on the above negotiation and information exchange, PLMNs may set or revoke authorizations and may provision parameters at different network levels for different purposes, including:
- assisting V2X service discovery,
- authorizing group members for establishing direct communications,
- authorizing group members to a limited use of resources outside of their attachment PLMN,
- provisioning identified application group members with specific quality of service and access configuration parameters for the establishment and the maintenance of actual direct links between group members, and
- provisioning identified application group members with specific RAN level parameters and their successive updates.

PLMNs may further perform service support actions at different network levels to contribute in maintaining V2X service operation. Examples of possible service support actions that may be performed at a PLMN may include:
- gathering information, possibly with RAN support, on one or more group members,
- potentially gathering information on, and ensuring exchange of, quality-of-service information regarding one or more group members,
- exchanging radio resource information regarding one or more group members between base stations to which said group members are connected, and
- triggering issuance of specific paging messages if any group member is idle.

Further, PLMNs may be configured to provide information related to service support status to the application layer.

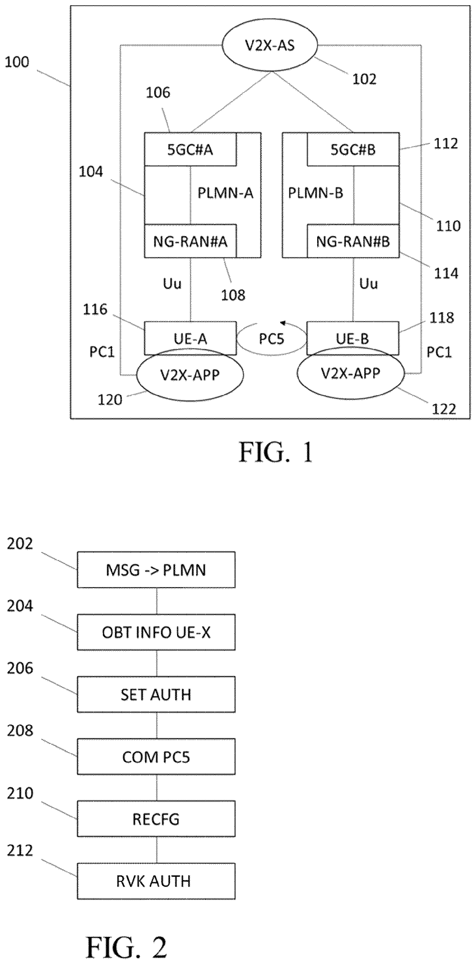

It is now referred to Figure 1, which depicts an exemplary communication system (100) comprising two UEs UE-A (116) and UE-B (118), each attached to a respective PLMN PLMN-A (104) and PLMN-B (110).

Each PLMN has a similar structure and comprises a core network (CN, for instance 5GC) (106, 112) and a radio access network (RAN, for instance 5G-RAN) (108, 114) for handling respective UEs.

In the application layer, a V2X application server (V2X-AS) (102) handles V2X application clients (V2X-APP) (120, 122) that are stored, installed and launched on the respective UEs.

Figure 1 depicts different types of communication links:
- V2X-AS may communicate directly with the V2X-APPs using PC1 interfaces,
- V2X-AS may further communicate with the PLMNs,
- UEs are handled by their attachment PLMN through respective Uu links, and
- a PC5 interface may be established between UE-A and UE-B.

The following specific aspects of the proposed technique:
- assistance for group forming and group management,
- specific configuration and reconfiguration of physical resources, and
- specific authorization provisioning and revoking,
are now described in the context of the exemplary communication system of Figure 1.

Each of these aspects may involve applying one or more of the following procedures:
- a procedure for the application layer to assist PLMN-A and PLMN-B in supporting inter-PLMN service,
- a procedure for signalling or cooperating between PLMN-A and PLMN-B at core network level (e.g. policy and/or QoS coordination),

- a configuration or reconfiguration procedure at RAN level, and
- a procedure for exchanging information through an existing PC5 sidelink between UE-A and UE-B.

It is further assumed to be straightforward, based on the following description, to implement the same aspects in a communication system comprising more than two PLMNs, in order to authorize a group of UEs formed of UEs belonging to different PLMNs (B, C, D...) from a list of PLMNs to have a limited access to PLMN-A's licensed resource. It is further assumed to be straightforward, based on the following description, to reciprocally give a similar access to UE-A in licensed resources of other PLMNs (B, C, D...).

### Assistance for group forming and group management

Assistance for group forming and group management is an aspect of the proposed technique and is now described.

V2X-AS may determine and/or predict UE location and/or UE performance by collecting and, optionally, combining information from the multiple PLMNs about the V2X-APPs. Examples of information that may be collected for this purpose and of the associated sources of such information are briefly introduced below.

For instance, as described in nplcit7, the core network of an attachment PLMN may comprise a network exposure function (NEF) arranged to expose information relating to UE location and to UE performance. Further, as described in nplcit5, information relating to UE location may be separately obtained from ETSI MEC location API. Further, as described in nplcit6, information relating to UE performance may be separately obtained from radio network information API. Further, as described in nplcit8, information relating to UE location and to initial UE groupings in the different PLMNs may be separately obtained from a service enabler layer for verticals. Further, as described in nplcit9, the core network of an attachment PLMN may comprise a network data analytics function (NWDAF) arranged to separately provide information relating to UE location and to QoS sustainability, optionally in the form of predictions. Further, the V2X-APP on a UE may itself separately provide estimations of UE location and of UE performance.

From the determined and/or predicted UE location and/or UE performance, groups of UEs that can benefit from direct communications may be determined. In other words, the V2X application layer may determine groups of UEs (or V2X application layer groups) which service performance could be improved by allowing setup of direct communications. In the example of Figure 1, UE-A and UE-B may be placed in the same group of UEs.

Once one or more groups of UEs are determined, the V2X application layer (V2X-AS) may generate a message containing information to assist the establishment of inter-PLMN direct communications between UEs of the same group of UEs. The message from the V2X application layer may be transmitted to the core networks CN of the involved PLMNs, the generated message.

In embodiments, the message from the V2X application layer may functionally be an application-assisted trigger of direct communication between the involved PLMNs. In the example of Figure 1, the involved PLMNs are PLMN-A and PLMN-B. The message may contain for instance a request to both PLMNs for providing inter-PLMN support for the V2X application service. The message may further include an indication of one or more regions concerned by the inter-PLMN support. The message may further include V2X application layer group identification of one or more groups of UEs and/or application identification of the UEs of one or more groups of UEs. The message may further include additional parameters for indicating expectations from the V2X application service in terms of quality of service (QoS). In the example of Figure 1, the message from the V2X application layer may comprise information assisting the establishment of inter-PLMN direct communications between UE-A and UE-B, such information comprising for instance an indication of a region where both UE-A and UE-B are located and/or application identification of UE-A and UE-B and/or V2X application layer group identification of the group of UEs comprising both UE-A and UE-B and/or additional parameters for indicating expectations from the V2X application service in terms of QoS for communication between UE-A and UE-B.

In embodiments, the message from the V2X application layer may functionally be an indication to the UEs of a V2X application layer group that the application needs inter-PLMN support. The UEs may be further configured to report information on the V2X application layer group to their attachment gNB upon receiving such indication. The information on the V2X application layer group may be the result of a UE-triggered discovery process and may include a number of discovered UEs as well as an information on the identity of the discovered UEs. The discovery process may be triggered either when the UE receives the indication that the application needs inter-PLMN support or beforehand. For instance, the UEs may be configured to trigger such discovery process periodically so that the results are readily available when the UEs receives the indication that the application needs inter-PLMN support. Optionally, the discovery context may be maintained in the different V2X application functions of the involved PLMNs and the results of the discovery processes triggered by the UEs may be exchanged between the V2X application functions of the involved PLMNs.

When the message from the V2X application layer is an application-assisted trigger of direct communication between the involved PLMNs, the core networks of the involved PLMNs may be configured to coordinate upon receiving such message. Coordination between the involved PLMNs at core network level is performed by signalling, i.e. exchanging information between said core networks. Optionally, the exchanged information relates to at least part of the UEs handled by the involved PLMNs. Optionally, the exchanged information relates to at least part of the UEs that are members of the V2X application layer groups. For instance, signalling at core network level may correspond to exchanging information related to:
- an internal identification of UEs in their attachment PLMN, and/or
- an internal QoS policy applied to UEs in their attachment PLMN, where the exchange of internal QoS policy allows the core networks of the involved PLMNs to be able to discover in advance the participants to the V2X application layer group, and/or
- authorizations on access of UEs to the resource pool of their attachment PLMN, and/or
- overall authorization policy and parameters for 5G ProSe Direct Discovery and Communication, and/or
- information relating to RAN such as a status of sessions for UEs in their attachment PLMNs and/or a list of gNBs in said PLMNs.

Coordination at core level may further comprise exchanging information on QoS parameters between the CN of the involved PLMNs. The information on QoS parameters may include Priority Level; Packet Delay Budget; Packet Error Rate; Averaging window (for GBR and Delay-critical GBR resource type only); Maximum Data Burst Volume (for Delay-critical GBR resource type only); and/or indications related to QoS such as a "need for HARQ".

Coordination at core level may further comprise exchanging information on group size between the access and mobility functions (AMF) of the involved PLMNs.

In embodiments, UEs may issue, or conversely get, reports from other UEs via existing PC5 links. The reports may comprise information relating to group members. The information relating to group members may include a number of UEs in the group and/or the identity of group members and/or their attachment PLMNs.

In embodiments, the same kind of information relating to group members may be reported by UEs to their attachment gNB via Uu link and RAN level coordination may further be implemented. RAN level coordination may involve gNBs of different PLMNs reporting or exchanging, via Xn links, information such as identity of group members or status of group communication between group members and their attachment gNB.

### Specific configuration and/or reconfiguration of physical resources

Configuration and/or reconfiguration of physical resources is an aspect of the proposed technique and is now described.

Resource pool configuration needs to be known in order for a PC5 communication to occur. UEs attached to a network may be informed, usually by RRC configuration or by SIB signalling, of any resource pool reconfiguration decided by the network. Information on configuration or reconfiguration may be conveyed to UEs of a given V2X application layer group by different means.

For instance, information on configuration or reconfiguration may be received by a first UE from its attachment PLMN and then relayed through a PC5 interface to a second UE. An advantage of relaying through the PC5 interface is simplicity since there is no need for defining a new container than an existing PC5 link. However, this also requires a significant time margin to be taken between the moment of deciding the reconfiguration and the moment of applying the reconfiguration, since the second UE needs to have enough time to get the information in order to avoid radio link failure as a result of applying the reconfiguration. In this example, information on configuration or reconfiguration is transmitted from a UE to another UE.

For instance, information on configuration or reconfiguration may be directly transmitted by an emitting gNB of at least one of the involved PLMNs to the UEs in a given V2X application layer group. Said emitting gNB has limited knowledge about the identity of UEs in the given group. The information on configuration or reconfiguration may be conveyed through e.g. a group PDCCH message encoded with an identifier that is specific to the given group or that is specific to a type of service (such as a dedicated RNTI). The emitting gNB, or another entity of the same PLMN, may further indicate a specific dedicated resource for allowing authorized UEs to respond to this message or to acknowledge this message. This dedicated resource may for example be common to all UEs in the given group. In this example, information on configuration or reconfiguration is transmitted at RAN level.

For instance, when knowledge on neighboring gNBs in partnered PLMNs is available as e.g. described in the previous section, information on configuration or reconfiguration may be transmitted through specific signalling via Xn links between neighboring gNBs. In this example, information on configuration or reconfiguration is transmitted through RAN level coordination.

For instance, at core network level, the Policy Control Function (PCF), may cooperate with the Access and Mobility Management Function (AMF) and optionally with the Session Management Function (SMF) to report on changes in QoS policy for one or more members of the given group. In this example, information on configuration or reconfiguration is transmitted through core network level coordination.

Although various possible means of transmitting information on configuration or reconfiguration are described above, it shall be noted that this information exchange may be minimized when the involved PLMNs are members of a federation of networks such as described in nplcit10.

### Known resource pool configuration or reconfiguration procedure

Configuration and/or reconfiguration of physical resources according to the proposed technique may be combined with known configuration or reconfiguration procedures, examples of which are now described.

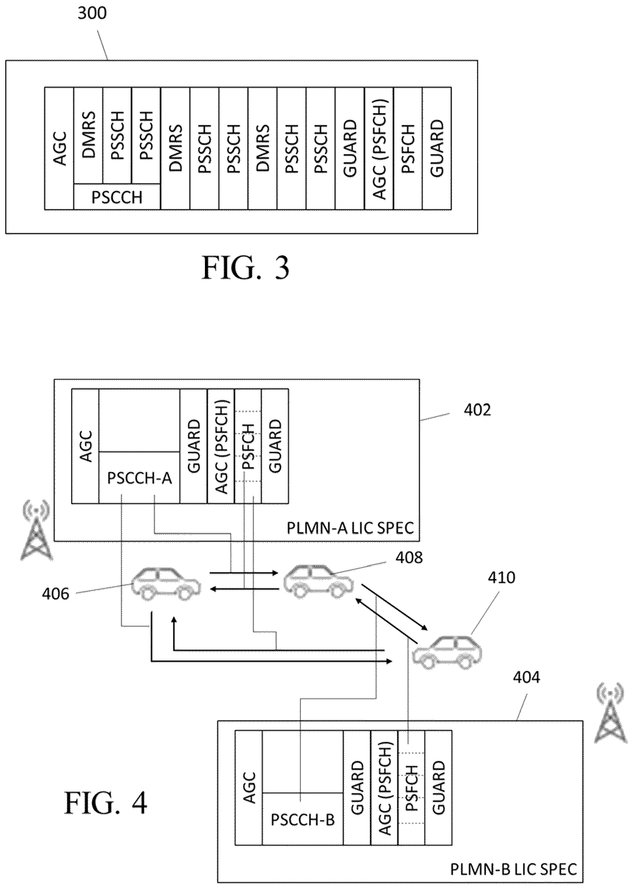

An example slot 300, having a known format of 3-symbol PSCCH, 3-symbol PSSCH-DMRS, and PSFCH is illustrated in Figure 3.

As disclosed in nplcit4, resource pools may be configured, or pre-configured, to a UE separately from the transmission perspective and the reception perspective. This allows a UE to monitor for PSCCH, and hence receive PSSCH transmissions, in resource pools other than those in which it transmits, so that it may attempt to receive transmissions made by other UEs in those pools.

The resources in which PSSCH may be transmitted may be scheduled or configured by a gNB (termed resource allocation mode 1) or may be determined through a sensing procedure conducted autonomously by the transmitting UE (termed resource allocation mode 2).

PSFCH may carry HARQ feedback over a sidelink from a UE which is an intended recipient of a PSSCH transmission (henceforth an Rx UE) to the UE which performed the transmission (henceforth a Tx UE). Sidelink HARQ feedback may be in the form of conventional ACK/NACK, or NACK-only with nothing transmitted in case of successful decoding.

The time resources for PSFCH may be configured, or pre-configured, per resource pool to occur once in every 1, 2, or 4 slots for instance. Frequency and.or code resources may be derived implicitly from those used by the associated PSSCH transmission, together with the L1 identity of the UE transmitting PSSCH and, when groupcast with ACK/NACK feedback is used, together with the identity within the group of the UE transmitting PSFCH.

### Known Sidelink HARQ signalling

HARQ feedback is well described in the literature. As disclosed in nplcit4, NR-V2X may support HARQ feedback based on transmission of ACK/NACK (or DTX) for sidelink unicast and groupcast services, as well as a NACK-only HARQ scheme particular to groupcast services.

NACK-only operation may be defined for groupcast to allow a potentially lower sidelink resource demand to be created when a larger number of Rx UEs need to send feedback to the same Tx UE. A typical use case is an extended sensors scenario where UEs within a given radius all receive the same sensor information from the Tx UE, and re-transmission occurs when any UE fails to decode successfully. Since such information may only be relevant within a given radius around the Tx UE (e.g. a few tens or hundreds of meters around a road junction), the transmission of NACK-only feedback may be restricted to UEs within such a radius, and any UE beyond such radius may be configured not to provide any HARQ feedback. The minimum range requirement of a service may be provided together with the associated QoS parameters from service layers.

A single bit of sidelink HARQ feedback, for instance, may be carried on PSFCH from an Rx UE to its Tx UE. In addition, when under the control of a gNB in resource allocation mode 1, the Tx UE may inform the gNB via PUCCH or PUSCH of the status of the sidelink HARQ feedback it has computed related to a particular dynamic or configured grant to assist the scheduling of re-transmissions and allocation of sidelink resources.

### Specific authorization provisioning/revoking

Authorization provisioning and/or revoking is an aspect of the proposed technique and is now described.

The Policy Control Functions (PCFs) of the core networks of the involved PLMNs may provision authorizations for the establishment of direct communications between UEs of the same V2X application layer group. The provisioning and revoking of these authorizations may be in the form of updates to V2X policy or to V2X authorization parameters, that are transmitted to the involved UEs.

These updates may be triggered by different entities and for different reasons.

For instance, service capabilities at UEs, which may be indicated by the UEs themselves, may be a trigger to a Policy Provisioning procedure at the PCF of a subscribed PLMN.

For instance, when accounting for UE mobility, information which is indicative of said UE mobility and which may be obtained from the AMF of a subscribed PLMN may be another trigger to a transmission of updates by the PCF.

For instance, a change of subscription in a list of PLMNs where the UE is authorized to perform V2X communication over PC5 reference point may be yet another trigger to a transmission of updates by the PCF. This may be achieved by using for instance UE Policy Association Modification initiated by the PCF procedure as defined in clause 4.16.12.2 of TS 23.502.

For instance, when a UE, which is normally attached to a home PLMN (H-PLMN), is roaming, therefore subscribes to a visited PLMN (V-PLMN), then the change of subscription resulting in updates of the service authorization parameters may be transferred to the UE by the PCF of H-PLMN (H-PCF) via the PCF of V-PLMN (V-PCF).

### Example embodiment

It is now referred to Figure 2 which illustrates, in a flowchart with several blocks (or logical instructions), an exemplary communication method that is adapted to the exemplary communication system of Figure 1.

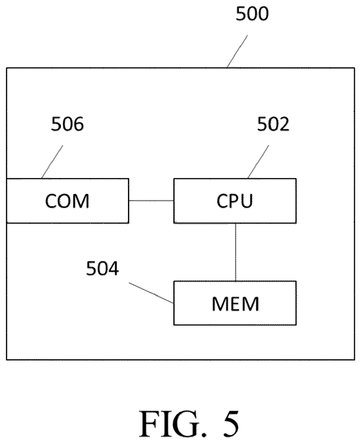

As described in the following, implementing the method of Figure 2 involves various entities in the communication system, each processing logical instructions. As depicted in Figure 5, each such entity may comprise a processing circuit (500) equipped with a processing unit (502) that may be configured to process such logical instructions. The processing unit may be operably connected to a memory (504) that may be configured to store such logical instructions and to a communication interface (506) with other such entities. The communication interface may be configured to receive or transmit information when such logical instructions are processed.

In block 202, V2X-AS issues a message to at least one entity in PLMN-A and to at least one entity in PLMN-B. An entity in a PLMN is here indifferently understood as an entity of the core network CN, or as an entity of the radio access network (RAN), or as a UE attached to the PLMN. The message is an information to PLMN-A and to PLMN-B about the need, expressed by V2X-AS, for inter-PLMN support. This inter-PLMN application support implies either the establishment of direct communication between UEs attached to different PLMNs and/or the establishment of direct communication between a UE attached to one PLMN and a node (gNB) of another PLMN.

In block 204, CN-A may acquire information on a group of UEs in other PLMNs that need application support from PLMN-A.

This information may be obtained through transferring a list of UEs, in said other PLMNs, authorized to access the V2X service.

Considering PLMN-B as an example of said other PLMNs, such list may be obtained from authorizations obtained from the policy control function (PCF-B) of PLMN-B and from data obtained from the unified data repository (UDR) of PLMN-B, which stores subscription information of the UEs attached to PLMN-B. Alternately and as a possible future addition to the current 3GPP SA6 specification, such list may be obtained from an application enabling layer, as described in nplcit8, in combination with the identification of the UEs in PLMN-B, which may be provided by the UDR of PLMN-B. Another possibility, for CN-A to acquire information on a group of UEs in other PLMNs that need application support from PLMN-A, is applicable when PLMN-A and PLMN-B are members of the same operator federation. In this case, as another possible future addition to the current specifications, CN-A and CN-B may each register the authorized UEs to a federation manager of the operator federation, and this registering may trigger an exchange of information between CN-A and CN-B regarding the UEs in PLMN-A and PLMN-B through a GSMA/OPG east-west bound interface as described in nplcit10.

In addition, the UEs in PLMN-A having received the message from V2X-AS in block 202, may inform their respective gNBs. This information may be relayed to CN-A which may then prepare a list of UEs in PLMN-A authorized to access the V2X service, which may be equated to a list of UEs in PLMN-A that need application support from other PLMNs. CN-A may then exchange (i.e. both transmit and receive) information on UEs that need inter-PLMN application support with the CN of other PLMNs. Possibly, CNs may be configured to exchange this information only with the CNs of a restricted list of PLMNs.

In block 206, CN-A may set one or more authorizations for the UEs, in the involved PLMNs other than PLMN-A, which need application support from PLMN-A. An authorization set by CN-A may be provided to various entities, in particular entities of:
- RAN-A,
- the CNs of the involved PLMNs, particularly the PCFs of the involved PLMNs,
- the application enabling layer, which in turn may forward the authorization to the involved PLMNs,
- the federation manager, when the involved PLMNs are members of the same federation as PLMN-A, in which case the federation manager may expose the authorization to the involved PLMNs, etc.

An authorization set by CN-A allows access to a specific physical resource or to a restricted list of specific physical resources in the physical resource pool that is reserved to PLMN-A. For instance, an authorization may allow access to a sidelink PSFCH resource and/or to a dedicated reserved resource on Uu link.

An example of physical resource utilization according to the proposed technique is described in Figure 4. In the example of Figure 4 a first UE (406) and a second UE (410) are attached to PLMN-A while a third UE (408) is attached to PLMN-B. The first UE may send a data message to both the second UE and the third UE using a data resource (PSCCH-A) in the licensed spectrum (402) of PLMN-A. The second UE and the third UE may both respond, specifically, by using a dedicated resource (for instance a PSFCH resource) in the licensed spectrum (402) of PLMN-A, and without being allowed either to use this dedicated resource for any other purpose or to use any other resource in the licensed spectrum (402) of PLMN-A. Assuming reciprocity, the first and/or the second UE may also reply, by using a dedicated data resource in the licensed spectrum of PLMN-B (404), to a data message sent by the third UE using a data resource in the licensed spectrum of PLMN-B.

Various restrictions may apply to the allowed access. For instance, the access may be allowed for a restricted number of UEs, for a given application only, during a limited period of time, etc.

CN-A may further provide any information on its resource configuration that may be helpful or necessary for the UEs that need application support from PLMN-A to effectively access the specific resource or list of specific resources associated to an authorization set by CN-A.

Information on the resource configuration of CN-A may include information related to:
- a resource pool structure in authorized resource pools managed by PLMN-A,
- allowed gNBs in RAN-A,
- allowed geographical areas in the geographical coverage of PLMN-A,
- a timer related to the duration of the authorization,
- group related identifiers for RAN exchanges,
- etc.

In block 208, UE-A may then directly communicate, using its own PC5 interface, with one or more UEs (collectively noted UE-X) belonging to the same group of UEs as UE-A and needing application support from PLMN-A to communicate with UE-A.

The use of the PC5 interface may be based on the current specifications and on the information, obtained by UE-X, about authorized resource pools of PLMN-A.

UE-X may acquire this information directly from gNB-A for instance. A possibility is that gNB-A broadcasts this information in SIB. Another possibility for an improved efficiency is that gNB-A sends a group control message such as a group PDCCH to a specific RNTI (X-RNTI) representative of UE-X, where the RNTI may be preconfigured, or may be set by an entity in PLMN-A and be part of the information exchanged in block 206 when setting the authorization.

UE-X may also acquire this information from a gNB in their home PLMN, provided PLMN-A has transferred this information in block 206.

UE-X may also acquire this information directly from UE-A via PC5 or via a local discovery process, such as the Model (A) or Model (B) discovery processes as described in 3GPP TS23.303 and 3GPP TS23.304.

UE-A may for instance send unicast or multicast data messages to UE-X using resource pools configured by PLMN-A as transmission resource pools available for this type of service into the licensed spectrum of PLMN-A.

When UE-X has received a unicast or multicast message as defined above, UE-X may respond by using an allowed resource in a resource pool belonging to PLMN-A's licensed spectrum, by following the same procedure as UEs under PLMN-A. For instance, when UEs under PLMN-A are allowed to respond to such messages with a PSFCH signal using an allowed resource pool dedicated to PSFCH signals, UE-X may also be allowed to respond to such messages, also with a PSFCH signal using the same allowed resource pool.

Yet, UE-X may not be allowed either to use other resources in the licensed spectrum of PLMN-A or to use resources in the allowed resource pool for any other purpose than for responding to a unicast or multicast message. In particular, UE-X may not be allowed to send any data signals by using resources in the licensed spectrum of PLMN-A.

For data transmission, reciprocity may apply, meaning that for instance UE-B may use the spectrum of PLMN-B to send unicast or multicast messages, and PLMN-B may further authorize UE-A to reply to such messages specifically with a PSFCH signal into PLMN-B's licensed spectrum, but not with a data signal.

UE-X may further send regular reports to its attachment gNB to inform being part of a group of UEs using inter-PLMN PC5 communication.

UE-X may further send information related to the allowed resource to its attachment gNB, which may further take this information into account when scheduling resources for UE-X. Indeed, for instance, UE-X may not be expected to simultaneously perform transmission both in PLMN-A and in its home PLMN.

UE-X may further regularly inform UE-A via unicast or groupcast about its attachment gNB or about its home PLMN. This information may also be updated in the core network AMF or in a specific extension of the radio information API that is described in nplcit6.

In block 210, PLMN-A may perform a resource reconfiguration such as a resource pool reconfiguration or a reconfiguration related to PSFCH periodicity.

Resource reconfigurations may be decided by various network entities (i.e. entities other than a UE) in PLMN-A, for instance:
- a gNB in the RAN,
- AMF or PCF nodes in the CN,
- an application service such as a radio network information service as described in nplcit6,
- an extension of an operator platform as described in nplcit10, or
- an OAM node performing long term planning.

UE-A may be informed of any resource reconfigurations through a known procedure such as a RRC configuration procedure.

UE-X may be informed by different means.

UE-X may be informed by UE-A via PC5, which has the advantages of a moderately low latency and of minimal changes to existing procedures. For instance, a flag may be added to a RRC reconfiguration message sent to UE-A, including a command for relaying the configuration message to UE-X. UE-A may then relay via sidelink the RRC reconfiguration message to UE-X via PC5 multicast, via PC5 unicast, or via PC5 RRC in case of unicast between UE-A and UE-X. UE-X may then send a mandatory ACK for UE-A to confirm, for instance via Uu link, the completion of the configuration transmission towards UE-X.

Alternately, gNB-A may directly inform UE-X of the resource reconfiguration, which has the advantage of a low latency. gNB-A may either broadcast information relating to reconfiguration in SIB, or may send a group control message such as a group PDCCH to a specific RNTI (X-RNTI) representative of UE-X. X-RNTI may be preconfigured or may be set by an entity in PLMN-A and be part of the information exchanged in block 206.

Alternately, UE-X may be informed of the resource reconfiguration by respective attachment PLMNs at RAN level. Advantages include a moderately low latency and an easy check of reconfiguration completion by respective gNBs, similar to current known RRC reconfiguration procedures. A possible procedure for informing UE-X by respective attachment PLMNs at RAN level is now described. It is assumed that UE-X may regularly report to UE-A their respective attachment gNB (gNB-X) via PC5 and not necessarily by using PLMN-A's spectrum. gNB-A may request from UE-A a report containing a list of neighboring gNBs (collectively noted gNB-X), each having at least one attached UEs configured to communicate with UE-A using an inter-PLMN PC5 sidelink with a specific authorization set by CN-A. Alternately, UE-A may be configured to regularly send such reports to gNB-A. gNB-A may then inform gNB-X about the reconfiguration. Each gNB among gNB-X may then reconfigure, respectively, any UE among UE-X that is attached to said gNB. As a prerequisite, gNB-X may each keep an updated list of the attached UEs involved in inter-PLMN PC5 sidelink, and UE-X may regularly report their status towards inter-PLMN PC5 sidelink to their respective gNB.

Alternately, UE-X may be informed of the resource reconfiguration by respective attachment PLMNs at CN level. RRC reconfiguration of UE-A may be triggered by a message from an entity of the CN of the home network (PLMN-X) of UE-X to a corresponding entity of the CN of PLMN-A. For instance, this message may be transmitted by PCF of PLMN-X to PCF of PLMN-A. Alternately, the message may be transmitted between application enabling layers (AELs), or between operator platforms (OPs) instead of between PCFs. As a possible future addition to current specifications, the message may indeed be transmitted by an operator platform (OP-X) of PLMN-X to an operator platform (OP-A) of PLMN-A via an east-west bound API between OP-X and OP-A, and further be relayed to the RAN of PLMN-A via a southbound interface (SBI). Reconfiguration via CN has the advantage of scalability and of reduction of signalling, since multiple UEs attached to PLMN-A may be reconfigured based on a single message exchanged between PCFs, AELs or OPs of PLMN-X and of PLMN-A.

In block 212, an authorization for a given UE-B among UE-X to use a resource of PLMN-A may be revoked by V2X-AS and/or by CN-A. Possible causes for revocation may include disconnection of UE-B from PLMN-B, for instance by being out of coverage or by roaming to another PLMN.

When such authorization is revoked by V2X-AS, V2X-AS may specifically inform UE-B of the revocation, for instance directly via PC1 or indirectly by sending a message to UE-A via PC1, for UE-A to then inform UE-B via PC5.

When such authorization is revoked by CN-A, or when such authorization is revoked by V2X-AS and V2X-AS further informs PLMN-A of the revocation, there are various possible means for PLMN-A to directly or indirectly inform UE-B of the revocation.

For instance, PLMN-A may instruct one or more specific gNBs to reconfigure their resource pool and/or to broadcast a message to directly inform UE-B of the revocation.

Alternately or in combination, UE-A may be informed of the revocation by PLMN-A, more specifically by its attachment gNB, to then inform UE-B via PC5.

Alternately or in combination, PLMN-A may inform PLMN-B of the revocation, for instance by an inter-PLMN communication at a core network level or at a RAN level. PLMN-B may then inform UE-B of the revocation.

## Claims

1. A communication method between a first network element (108, 116, 406, 410) attached to a first public land mobile network (104) and a second network element (114, 118, 408) attached to a second public land mobile network (110), the second network element not being attached to the first public land mobile network,
the method being related to an authorization for the second network element to access a specific network resource of the first public land mobile network, wherein the authorization only enables the second network element to access said specific network resource for a specific use related to a communication with the first network element, the method comprising at least one element of the following list:
- initiating a provisioning of the authorization,
- provisioning, at the first public land mobile network, the authorization to the second network element, and
- accessing, at the second network element, the specific network resource of the first public land mobile network for the specific use.

2. The method of claim 1, wherein initiating the provisioning of the authorization is performed based on application-level information obtained:
- at an application server (102) handling application layer clients (120, 122) being run on the first and second network elements, or
- at a federation manager connected to the first and the second public land mobile networks, the federation manager having discovered a service involving an application server handling application layer clients being run on the first and second network elements.

3. The method of claim 1 or 2,
wherein the method uses an indication that the first and second network elements are both members of a same group of network elements; and/or
the method further comprises forming and/or managing groups of network elements attached to different public land mobile networks;
wherein forming and/or managing groups of network elements is based on collected data related to the network elements, said collected data comprising, for a given network element, data of at least one type among the following list:
- an indication of a physical location,
- an estimation of a communication performance,
- an estimation of a quality-of-service sustainability, and
- a grouping information with at least one other network element attached to the same public land mobile network.

4. The method of any one of claims 1 to 3, wherein the method comprises transmitting assistance information to the first and/or the second public land mobile networks, the assistance information being related to the authorization to be provisioned.

5. The method of any one of claims 1 to 4, wherein assistance information related to the authorization to be provisioned is transmitted to the first and/or the second public land mobile networks, and wherein the method comprises performing a network coordination between the first and the second public land mobile networks based on the assistance information.

6. The method of claim 4 or 5, wherein the assistance information comprises at least an indicator, or a request, of inter-public land mobile network support.

7. The method of any one of claims 1 to 6, wherein the method further comprises performing a discovery of the second network element at the first public land mobile network, at least by performing an exchange of information through a PC5 interface between the first network element and the second network element.

8. The method of any one of claims 1 to 6, the method further comprising, at the first network element, discovering the second network element through a PC5 interface between the first network element and the second network element.

9. The method of any one of claims 1 to 8, wherein the specific use is sending feedback to the first network element in response to a data packet previously sent by the first network element using a network resource of the first public land mobile network when the second network element is an intended recipient of the data packet.

10. A computer program comprising instructions which, when the program is executed by a processor (502), cause the processor to carry out the method of any one of claims 1 to 9.

11. An application server (102) connected to a communication system comprising a first network element (108, 116, 406, 410) attached to a first public land mobile network (104) and a second network element (114, 118, 408) attached to a second public land mobile network (110), the second network element not being attached to the first public land mobile network, the first and the second network elements each running an application layer client (120, 122),
- the application server handling the application layer clients,
- the application server being configured for transmitting application-level information to an authorization provisioning initiation module configured for initiating, based on the application-level information, a provisioning of an authorization for the second network element to access a specific network resource of the first public land mobile network (PLMN-A), wherein the authorization only enables the second network element to access said specific network resource for a specific use related to a communication with the first network element.

12. A federation manager in a communication system comprising a first network element (108, 116, 406, 410) attached to a first public land mobile network (104) and a second network element (114, 118, 408) attached to a second public land mobile network (110), the second network element not being attached to the first public land mobile network, the first and the second network elements each running an application layer client (120, 122),
- the federation manager being connected to the first public land mobile network and to the second public land mobile network,
- the federation manager having discovered a service involving an application server(102) handling the application layer clients,
- the federation manager being configured for transmitting application-level information to an authorization provisioning initiation module configured for initiating, based on the application-level information, a provisioning of an authorization for the second network element to access a specific network resource of the first public land mobile network (PLMN-A), wherein the authorization only enables the second network element to access said specific network resource for a specific use related to a communication with the first network element.

13. An authorization provisioning module in a communication system comprising a first network element (108, 116, 406, 410) attached to a first public land mobile network (104) and a second network element (114, 118, 408) attached to a second public land mobile network (110), the second network element not being attached to the first public land mobile network, - the authorization provisioning module being configured for provisioning, at the first public land mobile network, an authorization for the second network element to access a specific network resource of the first public land mobile network, wherein the authorization only enables the second network element to access said specific network resource for a specific use related to a communication with the first network element.

14. A network element (114, 118, 408) in a communication system,
- the communication system further comprising a corresponding network element (108, 116, 406, 410) attached to a first public land mobile network (104),
- the network element being attached to a second public land mobile network (110),
- the network element not being attached to the first public land mobile network,
- the network element being configured for accessing a specific network resource of the first public land mobile network for a specific use relating to a communication with the corresponding network element.

15. The network element of claim 14, wherein the network element is a user equipment or a base station of the second public land mobile network.
